# EUROPÄISCHE PATENTANMELDUNG

(11) **EP 3 312 849 A1**
(43) Veröffentlichungstag der Anmeldung: **25.04.2018**
(21) Anmeldenummer: 17196281.4
(22) Anmeldetag: 13.10.2017
(51) Int. Cl.: H01B 13/18, B60R 16/03, H01B 7/00, H01B 7/08

(54) **VERFAHREN ZUM HERSTELLEN EINER FLACHLEITERANORDNUNG**

(30) Priorität: 18.10.2016 DE 102016119829
(71) Anmelder: ALANOD GmbH & Co. KG, 58256 Ennepetal (DE)
(72) Erfinder: SPECHT, Klaus, 84144 Geisenhausen (DE); REISSENWEBER, Dirk, 96237 Ebersdorf (DE); STEPHAN, Ludwig, 4962 Mining (AT); SCHANDL, Josef, 84163 Marklkofen-Warth (DE)
(74) Vertreter: Patent- und Rechtsanwälte Dr. Solf & Zapf

(57) **Zusammenfassung**

Die Erfindung betrifft ein Verfahren zum Herstellen einer Flachleiteranordnung (7), mit den Schritten: Bereitstellen einer elektrisch leitenden Flachleiterschiene (1); Vorgeben von zumindest einem Kontaktierungsbereich an der Flachleiteroberfläche (2) der Flachleiterschiene (1); Auftragen einer Trennschicht (4) an einem den Kontaktierungsbereich (3) umfassenden Teilbereich der Flachleiteroberfläche (2), wobei die Trennschicht (4) die Eigenschaft hat, stärker an einem vorgegebenen Isolationsmaterial einer Isolationsschicht (8) als an der Flachleiteroberfläche (2) anzuhaften; Herstellen der das Isolationsmaterial aufweisenden Isolationsschicht (8) an der Flachleiterschiene (1), nachdem diese mit der Trennschicht (4) versehen worden ist; Entfernen eines am Kontaktierungsbereich (3) der Flachleiterschiene (1) hergestellten Abschnitts (9) der Isolationsschicht (8) mitsamt der darunterliegenden Trennschicht (4).

## Beschreibung

Die Erfindung betrifft ein Verfahren zum Herstellen einer Flachleiteranordnung.

Durch die vermehrte Anwendung unterschiedlicher Materialkombinationen in Fahrzeugkarosserien bis hin zur kompletten CFK-Karosserie (zum Beispiel bei Monocoques) wird zukünftig die elektrische Masserückführung bei Kraftfahrzeugen stark beeinträchtigt bzw. sogar unfunktionell. Hierdurch wäre zum Teil die Masserückführung durch den Einsatz vermehrter sogenannter Litzenleiter notwendig und eine Gewichtserhöhung des Bordnetzes bzw. des Kabelbaumes zu erwarten.

Der über sogenannte Massebolzen eingeleitete elektrische Masserückstrom folgt üblicherweise immer dem Weg des geringsten elektrischen Widerstandes. Durch die Verwendung unterschiedlicher Karosseriematerialien und Verbindungstechniken, wie zum Beispiel Kleben, Nieten, Schweißen und dergleichen, entsteht ein undefinierter bzw. ungerichteter elektrischer Masserückstrom von Verbrauchern zu einer Fahrzeugbatterie. Dieser ungerichtete Masserückstrom baut ein elektromagnetisches Feld auf, welches sich negativ auf Fahrzeuginsassen und die Bordelektronik auswirken kann.

Durch die Anwendung sogenannter Flachleiterschienen, insbesondere aus Aluminium, können der Einbauraum und das Leitergewicht für die elektrische Masserückführung stark reduziert werden. Derartige Flachleiterschienen werden häufig entlang einer Bodengruppenkontur von einem Hinterraum bis zu einem Motorraum eines Fahrzeugs verlegt. Insbesondere eine mehrlagige Flachleiterstruktur als zentrale elektrische Versorgung und Masserückführung eliminiert das Ausbilden eines elektromagnetischen Feldes unabhängig von den eingesetzten Karosseriewerkstoffen. Durch derartige Flachleiteranordnungen in Fahrzeugen wird zudem eine verbesserte Bordnetzstabilität erreicht.

Um eine effektive gegenseitige Auslöschung von elektromagnetischen Feldern von zwei benachbarten Flachleiterschienen zu ermöglichen, ist eine möglichst nahe und flächige Positionierung der beiden Flachleiterschienen zueinander erforderlich. Im Gegensatz zu Flachleiter-Versorgungsleitungen, die hauptsächlich im Unterbodenbereich und teilweise auch im Interieurbereich ohne eine zweite, masserückführende Schiene, meist mit relativ starken PVC-Isolationsstärken von über 2,5 mm eingesetzt werden, benötigen derartige mehrschichtige Flachleiterschienen relativ geringe Isolationswandstärken.

Um eine besonders einfache und kostengünstige Abisolierbarkeit bei Aluminiumflachleiterkernen, also bei Flachleiterschienen aus Aluminium, zu ermöglichen, werden häufig nicht anhaftende Isolationsmaterialien zum Isolieren solcher Aluminiumflachleiterkerne verwendet. Diese Isolationsmaterialien weisen durch ihre Verarbeitung, geometrische Anordnung und Temperaturwechsel jedoch häufig relativ hohe innere mechanische Spannungen auf, die einen Materialschrumpf von über 20 mm über eine Länge von 3.000 mm aufweisen können. Auch in Querrichtung können mechanische Spannungen entstehen, so dass bei Temperaturwechseltests oder Temperaturschocktests die verwendeten Isolationsmaterialien reißen. Aufgrund von Relativbewegungen zwischen Flachleiterschienen und den zur Isolierung eingesetzten Isolationskunststoffen, v.a. durch Temperaturwechsel-Längenveränderungen, kann es zu Schnitteffekten und damit zu Isolationsmaterialbrüchen kommen.

Eine stoffschlüssige Verbindung des Isolationskunststoffes mit der Flachleiterschiene würde einen Materialschrumpf eliminieren und eine optimale Temperaturwechselbeständigkeit des Gesamtbauteils, also der mit dem Isolationskunststoff beschichteten Flachleiterschiene, bewirken. Jedoch würde dies ein wesentlich aufwändigeres und teureres Abisolierungsverfahren nach sich ziehen, um eine optimal anhaftende Isolation von dem Flachleiterkern, also der Flachleiterschiene, wieder zu lösen. Beispielsweise könnte ein Abfräsen der Isolationsschicht vom Flachleiterkern eine Spanbildung hervorrufen. Um einen Kurzschluss durch einen verbleibenden Metallspan zu vermeiden, wäre ein aufwändiges Reinigungsverfahren erforderlich. Bei einem flächigen Ablasern einer Isolation kann beispielsweise eine thermische Veränderung der Metalloberfläche auftreten, wobei zudem undefinierte Degradationsreste der Isolation unerwünschte Wechselwirkungen verursachen können.

Es ist daher die Aufgabe der vorliegenden Erfindung, ein Verfahren zum Herstellen einer Flachleiteranordnung, welche zumindest eine elektrisch leitende Flachleiterschiene und eine diese zumindest teilweise ummantelnde Isolationsschicht aufweist, bereitzustellen, mittels welchem gleichzeitig eine besonders stabile Verbindung zwischen der Isolationsschicht und der Flachleiterschiene und eine besonders einfache lokale Abisolierbarkeit der Isolationsschicht ermöglicht wird.

Diese Aufgabe wird durch ein Verfahren zum Herstellen einer Flachleiteranordnung mit den Merkmalen des Patentanspruchs 1 gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Herstellen einer Flachleiteranordnung wird eine elektrisch leitende Flachleiterschiene bereitgestellt. Diese elektrisch leitende Flachleiterschiene dient als Flachleiterkern der herzustellenden Flachleiteranordnung. Es wird zumindest ein Kontaktierungsbereich an einer Flachleiteroberfläche der bereitgestellten Flachleiterschiene vorgegeben. Bei der Verwendung der Flachleiteranordnung, insbesondere zur elektrischen Masserückführung in Kraftfahrzeugen, dient der zumindest eine Kontaktierungsbereich zum Kontaktieren von Kabeln oder auch anderen Leitern an der Flachleiterschiene.

Bei der Flachleiterschiene handelt es sich um eine bandförmige Schiene aus einem stromleitenden Material. Die Abmaße der Flachleiterschiene in Breitenrichtung und Längenrichtung sind dabei groß im Verhältnis zur Dicke, also der Höhe, der Flachleiterschiene. Die besagten Flachseiten erstrecken sich in Längs- und Querrichtung der Flachleiterschiene und weisen eine wesentlich größere Oberfläche als jeweilige Seitenflächen der Flachleiterschiene auf, die sich in Längs- und Hochrichtung der Flachleiter erstrecken. Die Flachseiten weisen zudem auch eine wesentlich größere Oberfläche als jeweilige Stirnflächen der Flachleiterschiene auf, die sich in Quer- und Hochrichtung der Flachleiterschiene erstrecken.

An einem den Kontaktierungsbereich umfassenden Teilbereich der Flachleiteroberfläche wird anschließend eine Trennschicht aufgetragen. Die Trennschicht hat dabei die Eigenschaft, dass ein vorgegebenes Isolationsmaterial im Kontaktierungsbereich stärker an der Trennschicht als an der Flachleiteroberfläche anhaftet oder zumindest eine Anhaftung an die Flachleiteroberfläche durch die Anwesenheit der Trennschicht unterbunden wird. Anschließend wird eine das Isolationsmaterial aufweisende Isolationsschicht an der Flachleiterschiene hergestellt, also nachdem diese mit der Trennschicht versehen worden ist. Das Herstellen der Isolationsschicht erfolgt dabei vorzugsweise derart, dass eine Verbindung, besonders bevorzugt eine stoffschlüssige Verbindung, zwischen der Isolationsschicht und der Flachleiteroberfläche sowie zwischen der Isolationsschicht und der Trennschicht ausgebildet wird. Schließlich wird ein am Kontaktierungsbereich der Flachleiterschiene hergestellter Abschnitt der Isolationsschicht mitsamt der darunterliegenden Trennschicht entfernt.

Der zumindest eine vorgegebene Kontaktierungsbereich dient zur Anbindung eines Kontaktelements, wie beispielsweise einer Schraublasche, einer Kontaktiersteckzunge, eines Schraubbolzens, einem Kabelschuh oder dergleichen. Alternativ kann an dem Kontaktierungsbereich auch direkt ein elektrischer Leiter mit der Flachleiterschiene elektrisch leitend verbunden werden.

Die entstehende Verbindung zwischen dem Isolationsmaterial und der Flachleiterschiene kann grundsätzlich formschlüssig, kraftschlüssig oder stoffschlüssig sein. Bei den ersten beiden Mechanismen handelt es sich um eine physikalische Bindung, welche durch eine mikroskopische oder makroskopische Verzahnung der jeweiligen Oberflächen der Werkstoffe, also zwischen der Flachleiterschiene und dem Isolationsmaterial, oder durch ein Aufschrumpfen der Isolationsschicht auf die Flachleiterschiene erzielt wird. Der Stoffschluss hingegen ist eine chemische Bindung zwischen den jeweiligen Werkstoffen, also zwischen der Flachleiterschiene und dem Isolationsmaterial. Stoffschlüssige Verbindungen werden alle Verbindungen genannt, bei denen die Verbindungspartner durch atomare oder molekulare Kräfte zusammengehalten werden. Sie sind gleichzeitig nicht lösbare Verbindungen, die sich hauptsächlich nur durch Zerstörung der Verbindungsmittel trennen lassen.

Die erfindungsgemäße Lösung besteht also darin, dass insbesondere bei einer Verwendung von selbst- bzw. anhaftendem Isolationsmaterial selektiv auf der Flachleiterschiene ein trennender Stoff in Form der Trennschicht aufgetragen wird. In den mit der Trennschicht beaufschlagten Bereichen kann nachfolgend eine konventionelle und vereinfachte Abisolation durchgeführt werden. Hingegen wird in den anderen Bereichen der Flachleiterschiene eine optimale Verbindung des Isolationsmaterials mit der Flachleiterschiene und damit eine langzeitbeständige und temperaturwechselbeständige Isolationsschicht gewährleistet. Oberflächenbereiche der Flachleiterschiene, die für eine nachfolgende Kontaktierung wieder freigelegt werden sollen, werden also mit der Trennschicht versehen, welche sich bei der Herstellung der Isolationsschicht mit dem Isolationsmaterial verbindet. Dadurch wird eine stoffschlüssige Verbindung zwischen dem Isolationsmaterial und der Flachleiterschiene an diesen Stellen verhindert. Die Trennschicht wird dabei selektiv auf die später abzuisolierenden Stellen der Flachleiterschiene anhaftend aufgetragen. Die Trennschicht verbindet sich bei der Herstellung der Isolationsschicht mit dieser, so dass an der Flachleiteroberfläche, nach einem Entfernen der Isolationsschicht, eine für eine Kontaktierung ausreichende, weiter bearbeitbare Oberfläche zur Verfügung steht. Vorzugsweise kann die Isolationsschicht dabei rückstandslos mitsamt der Trennschicht von der Flachleiteroberfläche entfernt werden.

Insbesondere kann durch einen regelmäßigen, getakteten und wiederkehrenden Trennmittelauftrag ein einheitliches und standardisiertes Halbzeug hergestellt werden, bei welchem eine Abisolation der Isolationsschicht je nach Erfordernis individuell durchgeführt werden kann.

Die als Flachleiterkern dienende Flachleiterschiene kann beispielsweise in Form eines Aluminiumflachleiterkerns, also aus Aluminium, hergestellt sein. Als Aluminiummaterial können alle üblichen Strangpressmaterialien oder Walzbänder mit einer Reinheit von mindestens 99,5% oder höher eingesetzt werden. Hierdurch wird eine ausreichende elektrische Leitfähigkeit bei einstellbarer Materialhärte gewährleistet. Derartige Aluminiumleiterkerne können beispielsweise Stärken von 0,5 bis 5,0 mm, vorzugsweise von 1,0 bis 3,0 mm aufweisen. Die Aluminiumkernbreiten reichen von 5 bis 60 mm, vorzugsweise von 15 bis 60 mm.

Bei dünnen Aluminiumflachleiterkernen, ganz allgemein bei dünnen Flachleiterschienen, kann eine Beaufschlagung mit der Trennschicht auf den jeweiligen Flachseiten, also allen besonders großen Oberflächenbereichen, ausreichen. Sind hingegen die Flachleiterschienen etwas dicker, kann es auch vorgesehen sein, dass an den schmalen Längsseiten ebenfalls die Trennschicht selektiv aufgetragen wird.

Als Isolationsmaterial können grundsätzlich alle Thermoplaste oder thermoplastischen Elastomere mit ausreichender elektrischer Isolationseigenschaft und Flexibilität verwendet werden. Insbesondere sind Polyolefine (PP-Copolymere, PE, etc.), Polyamide (PA 12, etc.), PVC, TPE oder vernetzendes PE einsetzbar.

Als Isolationsschichtstärken bzw. -wandstärken der Isolationsschicht sind je nach Kunststofftyp und Verarbeitungstechnik 0,15 bis 3,5 mm, bevorzugt 0,3 bis 1,5 mm ausreichend. An jeweiligen schmalen Längsseiten der Flachleiterschienen können bevorzugt 0,5 bis 2,0 mm Wandstärke Anwendung finden.

Eigene Messungen an 60 x 1 mm Aluminiumwalzbändern mit nur 0,3 mm PP-Isolation mit Überständen an den schmalen Längsseiten der Flachleiterschiene weisen eine gemessene Durchschlagsfestigkeit von 16 KV auf. Somit können die dargestellten Flachleiteranordnungen neben dem Bereich von 12 V und 48 V auch im Hochvoltbereich angewendet werden.

Die Schichtstärke der Isolationsschicht kann weiterhin die Aufgabe haben, eine durch einen Walzband-Schnittprozess verursachte Wölbung der Flachleiterschiene quer zur Hauptausrichtungsachse oder eine Gratbildung auszugleichen und eine ausreichende Durchschlagsfestigkeit zu gewährleisten. Ferner kann auch eine außermittige Lage der als Flachleiterkern dienenden Flachleiterschiene während der Herstellung der Isolationsschicht mit einer ausreichenden Isolationsschichtstärkeoder -geometrie abgefangen werden.

Aufgrund des Leichtbaugedankens ist Aluminium als stromleitendes Kernmaterial für die Flachleiterschiene zu bevorzugen. Jedoch können auch weitere gängige elektrisch leitende Materialien bzw. Legierungen, wie zum Beispiel Kupfer oder Messing anstelle von Aluminium verwendet werden. Die Flachleiterschiene kann dabei unterschiedlichste Querschnittsgeometrien beziehungsweise Profilformen aufweisen und dabei verschiedenste Breiten- als auch Höhenverhältnisse aufweisen. Insbesondere wenn Aluminium als Material für die Flachleiterschiene eingesetzt wird, kann es sich dabei um Walzbleche, Walzbänder, Strangpressprofile, Knet- oder Gießmaterialien oder auch um Folien handeln.

Mittels des erfindungsgemäßen Verfahrens wird also die Herstellung einer Flachleiteranordnung, welche zumindest eine elektrisch leitende Flachleiterschiene und eine diese zumindest teilweise ummantelnde Isolationsschicht umfasst, ermöglicht. Die derart hergestellten Flachleiteranordnungen können zur gezielten elektrischen Versorgung und/oder Masserückführung in Fahrzeugen mit schlecht oder nicht elektrisch leitenden Karosserien, beispielsweise aus CFK, eingesetzt werden. Beim Einsatz derartiger Flachleiteranordnungen kann eine Verbesserung der elektromagnetischen Verträglichkeit im Fahrzeug ohne eine zusätzliche Schirmung realisiert werden. Auch ist eine konventionelle Kabelbaummontage mit flexiblen Versorgungsleitungen möglich, insbesondere ohne externe B+-Leitungen mit Karosseriedurchbrüchen und Abdichtungssystemen. Die als elektrisches Versorgungs- und/oder Masseband dienende Flachleiteranordnung kann an jeder Stelle kontaktiert werden, ist also "multidrop"-fähig. Insbesondere wenn Aluminium als Material für die Flachleiterschiene verwendet wird, kann ein besonders hoher Leichtbaugrad bei der hergestellten Flachleiteranordnung erzielt werden. Derartige Flachleiteranordnungen weisen zudem eine reduzierte Einbauhöhe im Vergleich zu den konventionellen, runden Versorgungs- oder Masselitzenleitern auf. Ferner weisen derartig hergestellte Flachleiteranordnungen eine höhere Stromtragfähigkeit als Litzenleiter mit gleicher Querschnittsfläche auf. Unter Verwendung derartiger Flachleiteranordnungen bei einer Mehrschichtflachleiterstruktur ist zudem eine erhöhte Bordnetzstabilität und Eliminierung von elektromagnetischen Feldern erzielbar. Darüber hinaus können eine Starter-Generator-Batterieschiene und eine Fahrzeuginnenraum-Versorgungsschiene (auch Klemme 30) voneinander entkoppelt werden. Die derart hergestellten Flachleiteranordnungen sind sowohl in 12 V-, 48 V-und Hochvolt-Bordnetzen einsetzbar.

Die Verwendung der mittels des erfindungsgemäßen Verfahrens hergestellten Flachleiteranordnungen ist nicht nur auf den Automobilbereich beschränkt.

Eine vorteilhafte Ausführung der Erfindung sieht vor, dass vor dem Herstellen der Isolationsschicht die Flachleiteroberfläche derart behandelt wird, dass eine stoffschlüssige Verbindung zwischen der Isolationsschicht und der Flachleiterschiene begünstigt wird. Vorzugsweise wird dafür die Flachleiteroberfläche elektrochemisch, chemisch oder physikalisch behandelt. Für eine optimale stoffschlüssige Verbindung zwischen dem Isolationsmaterial und dem Flachleiterschienenmaterial wird also vorzugsweise die Flachleiteroberfläche beispielsweise elektrochemisch behandelt. Eine elektrochemische Behandlung kann zum Beispiel durch eine anodische Oxidation, beispielsweise mittels eines Eloxalverfahrens, erfolgen. Insbesondere bei einem Temperatureintrag bei der Herstellung der Isolationsschicht kann dadurch eine chemische Reaktion des Isolationsmaterials an der Flachleiteroberfläche der Flachleiterschiene begünstigt werden. Aber auch anderweitige, chemische oder physikalische Oberflächenbehandlungen bzw. eine günstige Materialkombination im Hinblick auf den eingesetzten Isolationswerkstoff und den Flachleiterschienenwerkstoff können eine stoffschlüssige Verbindung zwischen dem Isolationsmaterial und der Flachleiterschiene begünstigen.

Gemäß einer weiteren vorteilhaften Ausführungsform der Erfindung ist es vorgesehen, dass die Trennschicht in Form eines flüssigen oder pastösen Trennmittels aufgetragen wird. In flüssiger oder pastöser Form kann das Trennmittel besonders einfach dosiert und in Form der Trennschicht aufgetragen werden.

In weiterer vorteilhafter Ausgestaltung der Erfindung ist es vorgesehen, dass das Trennmittel mittels zumindest einem der folgenden Verfahren aufgetragen wird: Sprühauftrag, wobei ein den Teilbereich umgebender Bereich der Flachleiteroberfläche maskiert oder nur lokal begrenzt benetzt wird; Tampondruck; Rollenauftrag; Siebdruck; Inkjetdruck. Je nachdem, an welchen Stellen und wie großflächig die Trennschicht aufgetragen werden soll, kann bei Verwendung eines flüssigen oder pastösen Trennmittels einer der zuvor genannten Verfahren ausgewählt werden, um ein optimales Ergebnis zu erzielen.

Gemäß einer alternativen vorteilhaften Ausführungsform der Erfindung ist es vorgesehen, dass die Trennschicht ein Klebeband ist. Anstelle eines flüssigen oder pastösen Trennmittels kann also auch ein Klebeband oder ein Haftband angebracht werden, welches ebenfalls eine lokal begrenzte trennende Wirkung zwischen der Isolationsschicht und der Flachleiteroberfläche bewirkt. Insbesondere bei Kleinserien kann es vorteilhaft sein, Klebebänder bzw. Haftbänder als Trennschicht zu verwenden. Die eingesetzten Klebebänder oder Haftbänder haben dabei die Eigenschaft, dass jeweilige Klebestoffe beim Abziehen vollständig am Klebeband bzw. Haftband anhaften bleiben und so keine Rückstände an der Flachleiteroberfläche der Flachleiterschiene hinterlassen. Dadurch kann eine besonders zuverlässige elektrische Kontaktierung an dem Kontaktierungsbereich oder den Kontaktierungsbereichen sichergestellt werden.

In weiterer vorteilhafter Ausgestaltung der Erfindung ist es vorgesehen, dass die Trennschicht Materialbestandteile umfasst, welche sich ebenfalls in dem Isolationsmaterial befinden. Dadurch wird eine Materialaffinität zwischen der Trennschicht und dem Isolationsmaterial sichergestellt, was die Verbindung, insbesondere die stoffschlüssige Verbindung, zwischen der Trennschicht und dem Isolationsmaterial begünstigt. Dies wiederum vereinfacht das rückstandslose lokale Abisolieren der Isolationsschicht.

Eine weitere vorteilhafte Ausführungsform der Erfindung sieht vor, dass das Isolationsmaterial zumindest teiltransparent ist und die Trennschicht eine andere Farbe als das Isolationsmaterial und als die Flachleiterschiene aufweist. Nach der Herstellung der Isolationsschicht kann dadurch auf besonders einfache Weise erkannt werden, wo die Trennschicht aufgetragen worden ist. Dies erleichtert das gezielte Entfernen der Isolationsschicht an den Stellen, welche beim Gebrauch der Flachleiteranordnung dann als Kontaktierungsbereich dienen sollen.

Alternativ oder zusätzlich ist es auch möglich, dass der unterhalb der Isolationsschicht angeordnete Kontaktierungsbereich auf der Isolationsschicht markiert wird. Zur Markierung des unterhalb der Isolationsschicht angeordneten Kontaktierungsbereichs, also des mit der Trennschicht versehenen Bereichs, können beispielsweise Laser oder Drucker verwendet werden. Diese Markierung sollte insbesondere mit dem jeweiligen Auftragsprozess der Trennschicht und dem dabei gegebenenfalls noch eingesetzten maskierenden Verfahren synchronisiert werden, um bei einer gezielten Entfernung der Isolationsschicht den mit der Trennschicht versehenen Bereich auch sicher treffen zu können.

Gemäß einer weiteren vorteilhaften Ausführungsform der Erfindung ist es vorgesehen, dass die Isolationsschicht hergestellt wird, indem die mit der Trennschicht versehene Flachleiterschiene durch ein Extrusionswerkzeug hindurch befördert wird, mittels welchem die Isolationsschicht außenseitig auf die Flachleiterschiene extrudiert wird. Im Extrusionsprozess erfolgt durch Temperatur- und Druckeintrag eine physikalische Verbindung oder sogar eine chemische Reaktion zwischen dem Isolationswerkstoff und der Flachleiterschiene und zwar dort, wo die Trennschicht nicht aufgebracht worden ist. Die Trennschicht wird dabei vor dem Extrusionsprozess derart anhaftend an der Flachleiterschiene angebracht, dass sie die bei der Extrusion auftretenden Scherkräfte übersteht, also ohne dass die aufgetragene Trennschicht während der Extrusion verwischt oder anderweitig von ihrer ursprünglichen Position an der Flachleiteroberfläche entfernt wird. Durch das Extrudieren kann die Isolationsschicht besonders einfach und schnell an der Flachleiterschiene angebracht werden, insbesondere wenn die gesamte Flachleiterschiene von der Isolationsschicht ummantelt werden soll.

Gemäß einer alternativen vorteilhaften Ausführungsform der Erfindung ist es vorgesehen, dass die Isolationsschicht hergestellt wird, indem die mit der Trennschicht versehene Flachleiterschiene in ein Spritzgießwerkzeug eingelegt und anschließend die Isolationsschicht außenseitig auf die Flachleiterschiene angespritzt wird. Durch Spritzguss ist es ebenfalls möglich, die Flachleiterschiene, sofern denn erforderlich, vollständig mit der Isolationsschicht zu ummanteln. Spritzguss ist dabei ebenfalls wie die Extrusion besonders gut bei hohen Stückzahlen dazu geeignet, kostengünstig und prozesssicher die Isolationsschicht an der Flachleiterschiene herzustellen. Weitere Alternativen zum Auftragen der Isolationsschicht sind der Sprühauftrag oder die Beschichtung über ein Tauchbad.

Eine weitere vorteilhafte Ausführungsform der Erfindung sieht vor, dass das Auftragen der Trennschicht in einen Herstellprozess der Flachleiterschiene oder in einen Herstellprozess der Isolationsschicht integriert wird. Diese Integration des Auftragens der Trennschicht, entweder in den Herstellprozess der Flachleiterschiene selbst oder in den Herstellprozess der Isolationsschicht, bringt eine relativ geringe bis vernachlässigbare Kostenerhöhung mit sich, bewirkt im Nachgang aber eine wesentliche Erleichterung bei der lokalen Abisolation der Isolationsschicht.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehenden in der Beschreibung genannten Merkmale und Merkmalskombinationen sowie die nachfolgend in der Figurenbeschreibung genannten Merkmale und Merkmalskombinationen sind dabei nicht nur in Alleinstellung sondern auch in Kombination untereinander verwendbar, ohne den Rahmen der Erfindung zu verlassen.

Die Zeichnung zeigt in:
- Fig. 1: eine erste Ausführungsform eines Verfahrensschritts zum Aufbringen eines Trennmittels an einer elektrisch leitenden Flachleiterschiene, wobei das Trennmittel nur an jeweils gegenüberliegenden Flachseiten der Flachleiterschiene aufgetragen wird;
- Fig. 2: eine zweite Ausführungsform des Verfahrensschritts zum Aufbringen des Trennmittels, wobei das Trennmittel zusätzlich auch noch an jeweiligen schmalen Längsseiten der nun etwas dicker ausgeführten Flachleiterschiene aufgetragen wird;
- Fig. 3: eine dritte Ausführungsform des Verfahrensschritts zum Aufbringen des Trennmittels, wobei das Trennmittel in Form von in Haupterstreckungsrichtung der Flachleiterschiene regelmäßig beabstandeten Querstreifen auf jeweiligen Flachseiten der Flachleiterschiene aufgetragen worden ist;
- Fig. 4: eine vierte Ausführungsform des Verfahrensschritts zum Aufbringen des Trennmittels, wobei das Trennmittel wiederum regelmäßig in Haupterstreckungsrichtung beabstandet, allerdings in Form von abschnittsweisen Ummantelungen an der Flachleiterschiene angebracht worden ist;
- Fig. 5: eine fünfte Ausführungsform des Verfahrensschritts zum Aufbringen des Trennmittels, wobei dieses in Haupterstreckungsrichtung regelmäßig voneinander beabstandet an jeweiligen Seitenbereichen der Flachseiten der Flachleiterschiene angebracht worden ist;
- Fig. 6: eine sechste Ausführungsform des Verfahrensschritts zum Aufbringen des Trennmittels, wobei die Flachleiterschiene klammerartig an ihren jeweiligen schmalen Längsseiten mit dem Trennmitteln beaufschlagt worden ist; und in
- Fig. 7: eine Perspektivansicht einer Flachleiteranordnung, welche gemäß der sechsten Ausführungsform mit dem Trennmittel beaufschlagt worden ist, wobei danach eine Isolationsschicht auf der Flachleiterschiene aufgebracht und anschließend an den mit den Trennschichten versehenen Bereichen die Isolationsschicht wieder abisoliert worden ist.

In den Figuren werden gleiche oder funktionsgleiche Elemente mit den gleichen Bezugszeichen versehen.

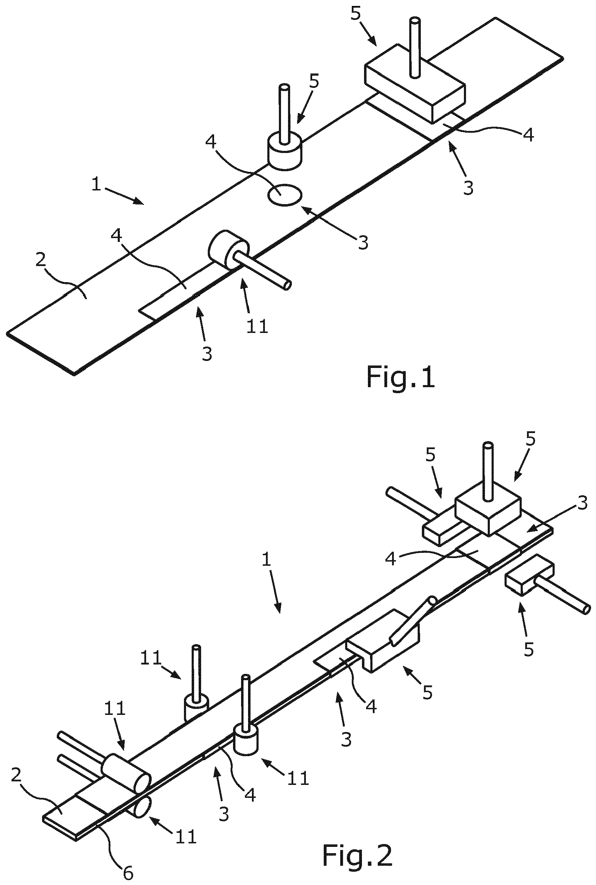

Eine Flachleiterschiene 1 ist in einer schematischen Perspektivansicht in Fig. 1 gezeigt. Die Flachleiterschiene kann beispielsweise aus Aluminium hergestellt sein. Die Flachleiterschiene dient als sogenannter Flachleiterkern zur elektrischen Versorgung oder Masserückführung in Kraftfahrzeugen. Dabei ist es noch erforderlich, dass die Flachleiterschiene 1 mit einer hier nicht dargestellten Isolationsschicht versehen wird. An unterschiedlichen Stellen einer Flachleiteroberfläche 2 der Flachleiterschiene 1 werden Kontaktierungsbereiche 3 vorgegeben. Diese Kontaktierungsbereiche 3 dienen beim Einsatz der Flachleiterschiene 1 als Stellen, an welchen beispielsweise Kabel oder andere elektrische Leiter an der Flachleiterschiene 1 kontaktiert werden. Daher ist es wichtig, dass an diesen Kontaktierungsbereichen 3 möglichst nur das blanke metallische, elektrisch leitende Material der Flachleiterschiene 1 vorliegt. Wie gesagt, muss sie Flachleiterschiene 1 für ihren Gebrauch mit einer hier nicht dargestellten Isolationsschicht versehen werden, wobei diese üblicherweise an den ausgewählten Kontaktierungsbereichen 3 wiederum abisoliert werden muss.

Um eine besonders leichte Abisolierung der hier nicht dargestellten Isolationsschicht zu ermöglichen, wird an den jeweiligen Kontaktierungsbereichen 3 ein Trennmittel unter Ausbildung jeweiliger Trennschichten 4 auf den Kontaktierungsbereichen 3 aufgetragen. Die Trennschichten 4 können auch etwas großflächiger als die eigentlichen Kontaktierungsbereiche 3 aufgetragen werden. Diese Trennschichten 4, also auch das verwendete Trennmittel, haben die Eigenschaft, dass ein bestimmtes Isolationsmaterial stärker an den Trennschichten 4 als an der Flachleiteroberfläche 2 anhaftet.

Die Trennschichten 4 können beispielsweise mittels der hier schematisch dargestellten Stempel 5 oder einer Rolle 11 aufgetragen werden. Sofern die Trennschichten 4 in Form eines flüssigen oder pastösen Trennmittels aufgetragen werden, können beispielsweise folgende Verfahren verwendet werden: ein Sprühauftrag, wobei die jeweiligen Umgebungsbereiche der Kontaktierungsbereiche 3 dabei vorzugsweise maskiert werden oder der Sprühauftrag lokal begrenzt ist, Tampondruck, Rollenauftrag, Siebdruck oder auch Inkjetdruck. Das Trennmittel und somit auch die Trennschichten 4, können sequenziell, regelmäßig, unregelmäßig oder gezielt selektiv auf der Flachleiteroberfläche 2 aufgetragen werden.

Die in Fig. 1 gezeigte Ausführungsform der Flachleiterschiene 1 weist relativ große, hier nicht näher bezeichnete Flachseiten auf, auf welchen die Trennschichten 4 aufgetragen werden. Die Flachleiterschiene 1 ist im vorliegend gezeigten Fall also sehr flach im Gegensatz zu ihrer Länge und Breite. In dem Fall kann es ausreichend sein, dass die Trennschichten 4 nur an den flächenmäßig relativ großen Flachseiten aufgebracht werden.

In Fig. 2 ist eine weitere mögliche geometrische Ausführungsform der Flachleiterschiene 1 in einer Perspektivansicht gezeigt. Wie zu erkennen, sind jeweilige schmale Längsseiten 6 bei der hier gezeigten Ausführungsform der Flachleiterschiene 1 etwas höher als bei der in Fig. 1 gezeigten Ausführungsform. In dem Fall ist es sinnvoll, dass die Trennschichten 4 an den Kontaktierungsbereichen 3 sowohl auf den flächenmäßig relativ großen Flachseiten als auch an den flächenmäßig etwas kleineren schmalen Längsseiten 6 aufgetragen werden. Dadurch wird die Abisolation des später aufzutragenden Isolationsmaterials an den Kontaktbereichen 3 erleichtert. Bei dieser geometrisch vergleichsweise massiven Ausführungsform der als Flachleiterkern dienenden Flachleiterschiene 1 ist es also vorgesehen, dass das Trennmittel zumindest teilweise umlaufend um die Flachleiterschiene 1 aufgetragen wird.

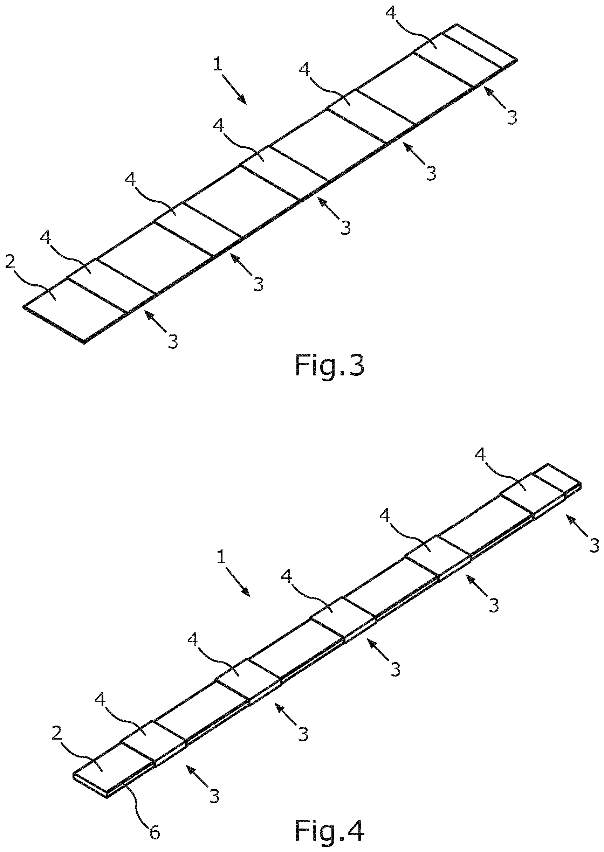

In Fig. 3 ist eine weitere mögliche Ausführungsform zum Auftragen der Trennschichten 4 an den jeweiligen Kontaktierungsbereichen 3 gezeigt. Im vorliegend gezeigten Fall ist die Flachleiterschiene 1 wiederum besonders flach ausgeführt, so dass die Trennschichten 4 nur an den jeweiligen Flachseiten aufgetragen werden müssen. Im vorliegenden Fall sind die Trennschichten 4 bandförmig und regelmäßig immer wiederkehrend aufgetragen worden.

In Fig. 4 ist eine weitere mögliche Ausführungsform zum Anbringen der Trennschichten 4 in einer schematischen Perspektivansicht gezeigt. Im vorliegend gezeigten Fall ist die Flachleiterschiene 1 geometrisch wieder wie in Fig. 2 ausgebildet, ist also etwas dicker als die in den Fig. 1 und 3 gezeigten Ausführungsformen. Die Trennschichten 4 sind wiederum bandförmig in regelmäßigen Abständen hintereinander in Längsrichtung der Flachleiterschiene 1 aufgetragen worden. Da die Flachleiterschiene 1 in dem hier gezeigten Ausführungsbeispiel wiederum relativ massiv, also mit einer gewissen Materialstärke ausgebildet ist, bietet es sich hier wiederum an, dass die Trennschichten 4 umlaufend auf die Flachleiterschiene 1, d. h. auch an den schmalen Längsseiten 6, aufgetragen werden.

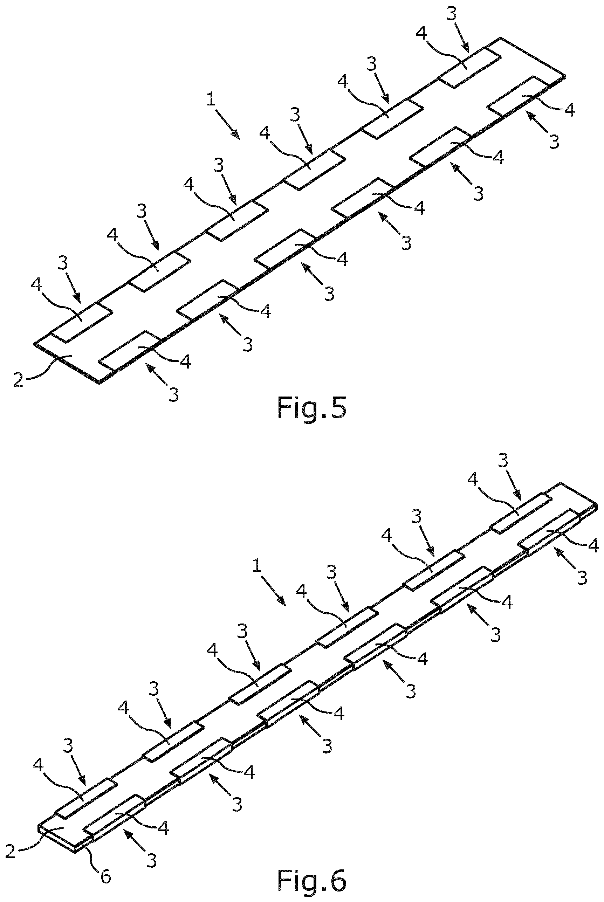

In Fig. 5 ist eine weitere mögliche Ausführungsform zum Anbringen der Trennschichten 4 an den Kontaktierungsbereichen 3 gezeigt. Die Trennschichten 4 sind wiederum regelmäßig aufgetragen worden, wobei diese jeweils in seitlichen Längsbereichen auf jeweiligen Flachseiten der der Flachleiterschiene 1 aufgetragen worden sind.

In Fig. 6 ist eine weitere mögliche Ausführungsform zur Anordnung der Trennschichten 4 an der Flachleiterschiene 1 dargestellt. Im vorliegenden Fall ist die Flachleiterschiene 1 wiederum wie in den Fig. 2 und 4 massiver und nicht ganz so flach wie in den Ausgestaltungen der Fig. 1, 3 und 5 ausgebildet. Die Trennschichten 4 sind wiederum in Längsrichtung hintereinander in regelmäßiger Beabstandung an der Flachleiterschiene 1 angebracht. Die Trennschichten 4 umfassen dabei klammerartig die jeweiligen schmalen Längsseiten 6 der Flachleiterschiene 1.

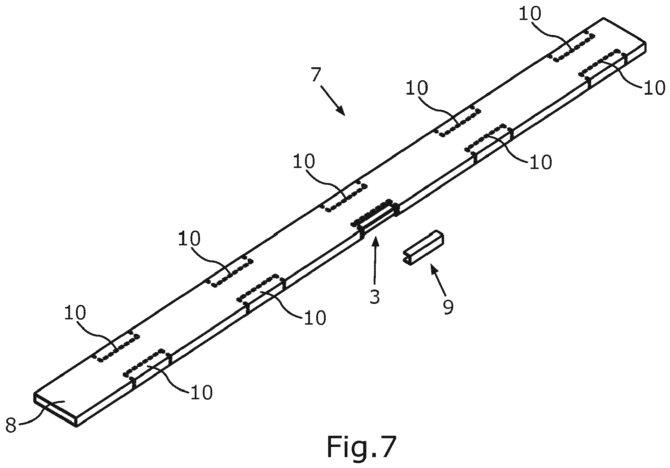

In Fig. 7 ist in einer schematischen Perspektivansicht eine Flachleiteranordnung 7 gezeigt, welche die in Fig. 6 gezeigte, hier nicht näher bezeichnete Flachleiterschiene 1 und eine diese ummantelnde Isolationsschicht 8 umfasst. Nachdem wie in Fig. 6 angedeutet die Trennschichten 4 an den Kontaktbereichen 3 aufgetragen worden sind, wird die Flachleiteranordnung 7 abisoliert, indem jeweilige Abschnitte 9 der zuvor hergestellten Isolationsschicht 8 wiederum von der Flachleiterschiene 1 entfernt werden.

Um die gezielte Entfernung der Abschnitte 9 zu erleichtern, werden nach der Herstellung der Isolationsschicht 8 jeweilige Markierungen 10 auf der Isolationsschicht 8 an den Stellen hergestellt, unter welchen sich die Kontaktbereiche 3 befinden, also genau dort, wo zuvor die Trennschichten 4 aufgebracht worden sind. Die Markierungen 10 können beispielsweise aufgelasert oder aufgedruckt werden.

Alternativ oder zusätzlich ist es auch möglich, dass für die Isolationsschicht 8 ein derartiges Material gewählt wird, welches zumindest teilweise transparent ist, wobei die Trennschichten 4 in dem Fall dann noch eine andere Farbe aufweisen als die Flachleiterschiene 1 und das Isolationsmaterial 8. Dadurch können die Trennschichten 4 durch die zumindest teilweise transparente Isolationsschicht 8 hindurchscheinen. Infolgedessen ist es auch einfach erkennbar, wo die Abschnitte 9 zum Abisolieren zu entfernen sind.

Die Isolationsschicht 8 kann beispielsweise dadurch hergestellt werden, dass die mit den Trennschichten 4 versehene Flachleiterschiene 1 durch ein nicht hier gezeigtes Extrusionswerkzeug hindurchgeführt wird, mittels welchem die Isolationsschicht 8 außenumfangseitig auf die Flachleiterschiene 1 aufextrudiert wird. Alternativ ist es beispielsweise auch möglich, dass die mit den Trennschichten 4 versehene Flachleiterschiene 1 in ein hier ebenfalls nicht dargestelltes Spritzgießwerkzeug eingelegt wird, mittels welchem anschließend Isolationsschicht 8 angespritzt wird.

Diese Herstellungsarten gelten gleichermaßen auch für die weiteren in den Fig. 1 bis 5 gezeigten Ausführungsformen der mit den Trennschichten 4 versehenen Flachleiterschienen 1.

Durch das Vorsehen der Trennschichten 4 kann sichergestellt werden, dass an den Kontaktbereichen 3 die Isolationsschicht 8 besonders einfach und insbesondere rückstandsfrei von der Flachleiterschiene 1 entfernt werden kann. Die jeweiligen Trennschichten 4 werden derart auf die Flachleiterschiene 1 aufgetragen, dass sie an dieser anhaften, jedoch nach dem Herstellen der Isolationsschicht 8 stärker an dieser als an der Flachleiteroberfläche 2 der Flachleiterschiene 1 anhaften.

In den übrigen Bereichen der Flachleiteroberfläche 2, also dort, wo die Trennschichten 4 nicht aufgetragen sind, kann die Isolationsschicht 8 eine stoffschlüssige Verbindung mit der Flachleiterschiene 1 eingehen. Vorzugsweise besteht das Isolationsmaterial der Isolationsschicht 8 aus Thermoplasten oder thermoplastischen Elastomeren mit einer ausreichenden elektrischen Isolationseigenschaft und Flexibilität. Beispielsweise kann die Isolationsschicht 8 aus Polyolefinen (PP-Copolymere, PE, etc.), Polyamiden (PA 12, etc.), PVC, TPE oder vernetzendem PE ausgebildet sein. Insbesondere die Anwesenheit chemisch reaktiver Gruppen im Isolationsmaterial der Isolationsschicht 8, wie beispielsweise Maleinsäureanhydrid oder Polyurethangruppen, ermöglichen eine sehr gute stoffschlüssige Anbindung zur Flachleiteroberfläche.

Besonders vorteilhaft ist es zudem, wenn die Flachleiterschiene 1 aus Aluminium hergestellt ist, beispielsweise aus einem Walzblech, einem Walzband, einem Strangpressprofil, aus Knet- oder Gießmaterial oder sogar aus einer Folie. Als stromleitendes Kernmaterial für die Flachleiteranordnung 7 können neben Aluminium aber auch andere gängige elektrisch leitende Materialien bzw. Legierungen, beispielsweise Kupfer oder Messing eingesetzt werden.

Neben den dargestellten Varianten der Flachleiterschiene 1 können auch weitere unterschiedlichste Querschnittsgeometrien bzw. Profilformen in der beschriebenen Weise mit den Trennschichten 4 versehen und anschließend mit der Isolationsschicht 8 überzogen werden, um anschließend im Bereich der zuvor aufgetragenen Trennschichten 4 die Abschnitte 9 der Isolationsschicht 8 zu entfernen.

### BEZUGSZEICHENLISTE

- 1: Flachleiterschiene
- 2: Flachleiteroberfläche
- 3: Kontaktierungsbereich
- 4: Trennschicht
- 5: Stempel
- 6: schmale Längsseite
- 7: Flachleiteranordnung
- 8: Isolationsschicht
- 9: Abschnitt
- 10: Markierung
- 11: Rolle

## Patentansprüche

1. Verfahren zum Herstellen einer Flachleiteranordnung (7), mit den Schritten:
- Bereitstellen einer elektrisch leitenden Flachleiterschiene (1);
- Vorgeben von zumindest einem Kontaktierungsbereich an der Flachleiteroberfläche (2) der Flachleiterschiene (1);
- Auftragen einer Trennschicht (4) an einem den Kontaktierungsbereich (3) umfassenden Teilbereich der Flachleiteroberfläche (2), wobei die Trennschicht (4) die Eigenschaft hat, stärker an einem vorgegebenen Isolationsmaterial einer Isolationsschicht (8) als an der Flachleiteroberfläche (2) anzuhaften;
- Herstellen der das Isolationsmaterial aufweisenden Isolationsschicht (8) an der Flachleiterschiene (1), nachdem diese mit der Trennschicht (4) versehen worden ist;
- Entfernen eines am Kontaktierungsbereich (3) der Flachleiterschiene (1) hergestellten Abschnitts (9) der Isolationsschicht (8) mitsamt der darunterliegenden Trennschicht (4).

2. Verfahren nach Anspruch 1,
**dadurch gekennzeichnet, dass** vor dem Herstellen der Isolationsschicht (8) die Flachleiteroberfläche (2) derart behandelt wird, dass eine stoffschlüssige Verbindung zwischen der Isolationsschicht (8) und der Flachleiterschiene (2) begünstigt wird.

3. Verfahren nach Anspruch 2,
**dadurch gekennzeichnet, dass** die Flachleiteroberfläche (2) elektrochemisch, chemisch oder physikalisch behandelt wird.

4. Verfahren nach einem der vorhergehenden Ansprüche,
**dadurch gekennzeichnet, dass** die Trennschicht (4) in Form eines flüssigen oder pastösen Trennmittels aufgetragen wird.

5. Verfahren nach Anspruch 4,
**dadurch gekennzeichnet, dass** das Trennmittel mittels zumindest einem der folgenden Verfahren aufgetragen wird:
- Sprühauftrag, wobei ein den Teilbereich umgebender Bereich der Flachleiteroberfläche (2) maskiert wird;
- lokal begrenzter Sprühauftrag auf Teilbereiche der Flachleiteroberfläche (2) ohne Maskierung;
- Tampondruck;
- Rollenauftrag;
- Siebdruck;
- Inkjetdruck.

6. Verfahren nach einem der Ansprüche 1 bis 3,
**dadurch gekennzeichnet, dass** die Trennschicht (4) ein Klebeband oder Haftband ist.

7. Verfahren nach einem der vorhergehenden Ansprüche,
**dadurch gekennzeichnet, dass** die Trennschicht (4) Materialbestandteile umfasst, welche sich ebenfalls in dem Isolationsmaterial der Isolationsschicht (8) befinden.

8. Verfahren nach einem der vorhergehenden Ansprüche,
**dadurch gekennzeichnet, dass** das Isolationsmaterial zumindest teiltransparent ist und die Trennschicht (4) eine andere Farbe als das Isolationsmaterial und als die Flachleiterschiene (2) aufweist.

9. Verfahren nach einem der vorhergehenden Ansprüche,
**dadurch gekennzeichnet, dass** der unterhalb der Isolationsschicht (8) angeordnete Kontaktierungsbereich (3) auf der Isolationsschicht (8) markiert wird.

10. Verfahren nach einem der vorhergehenden Ansprüche,
**dadurch gekennzeichnet, dass** die Isolationsschicht (8) hergestellt wird, indem die mit der Trennschicht (4) versehende Flachleiterschiene (2) durch ein Extrusionswerkzeug hindurchbefördert wird, mittels welchem die Isolationsschicht (8) außenseitig auf die Flachleiterschiene (2) extrudiert wird.

11. Verfahren nach einem der Ansprüche 1 bis 9,
**dadurch gekennzeichnet, dass** die Isolationsschicht (8) hergestellt wird, indem die mit der Trennschicht (4) versehende Flachleiterschiene (2) in ein Spritzgießwerkzeug eingelegt und anschließend die Isolationsschicht (8) außenseitig auf die Flachleitschiene angespritzt wird.

12. Verfahren nach einem der vorhergehenden Ansprüche,
**dadurch gekennzeichnet, dass** das Auftragen der Trennschicht (4) in einen Herstellprozess der Flachleiterschiene (1) oder in einen Herstellprozess der Isolationsschicht (8) integriert wird.

13. Verfahren nach einem der vorhergehenden Ansprüche,
**dadurch gekennzeichnet, dass** am Kontaktierungsbereich (3) der Flachleiterschiene (1) nach Entfernung des Abschnitts (9) der Isolationsschicht (8) das Anbringen eines Kontaktierungselements in Form einer Schraublasche, einer Steckzunge, eines Schraubbolzens oder eines Litzenleiters erfolgt.
